Europäisches Patentamt

European Patent Office

Office européen des brevets

(11) Numéro de publication: **0 384 814**
**A1**

# DEMANDE DE BREVET EUROPEEN

(21) Numéro de dépôt: 90400432.2

(51) Int. Cl.5 **H04N 5/21**

(22) Date de dépôt: **16.02.90**

(30) Priorité: **17.02.89 FR 8902079**

(43) Date de publication de la demande:
**29.08.90 Bulletin 90/35**

(84) Etats contractants désignés:
**DE GB**

(71) Demandeur: **THOMSON VIDEO EQUIPEMENT**
**17, rue du Petit Albi**
**F-95800 Cergy Saint Christophe(FR)**

(72) Inventeur: **Zanier, Edouard, c/o Thomson-CSF,**
**SCPI**
**CEDEX 67**
**F-92045 Paris le Défense(FR)**
Inventeur: **Desmons, Gérard, Thomson-CSF,**
**SCPI**
**CEDEX 67**
**F-92045 Paris La défense(FR)**

(74) Mandataire: **Courtellemont, Alain et al**
**THOMSON-CSF SCPI**
**F-92045 PARIS LA DEFENSE CEDEX 67(FR)**

(54) **Procédé et dispositif de débruitage d'un signal et leur application à la correction de contour d'une caméra de télévision.**

(57) L'invention concerne un procédé et un dispositif de débruitage d'un signal de télévision ou d'un signal radar. Elle consiste à annuler le signal bruité Ve lorsque son amplitude est inférieure au niveau du bruit Vd et à transmettre intégralement et sans déformation le signal d'amplitude Ve supérieure ou égale au niveau du bruit Vd. Ces fonctions sont réalisées par un transistor, 13 ou 11, respectivement pour les signaux positifs ou négatifs, monté en base commune et fonctionnant en régime bloqué lorsque $|Ve| < |Vd|$ et en régime saturé lorsque $|Ve| > |Vd|$.

Application à la correction de contour d'un signal de télévision.

FIG_4-b

# PROCEDE ET DISPOSITIF DE DEBRUITAGE D'UN SIGNAL ET LEUR APPLICATION A LA CORRECTION DE CONTOUR D'UNE CAMERA DE TELEVISION

La présente invention se rapporte à un procédé de débruitage de signaux, notamment dans une caméra, au dispositif correspondant, et à leur application à la correction de contour d'une caméra de télévision.

Classiquement, dans le circuit de correction de contour d'une caméra, le débruitage est obtenu par un écrêtage du signal bruité, le niveau d'écrêtage étant égal à l'amplitude du bruit. L'écrêtage du signal est obtenu par un circuit électronique utilisant le seuil de conduction d'une diode ultra rapide ou de la jonction d'un transistor hyperfréquence à commutation très rapide et monté en diode. L'inconvénient de ce dispositif est qu'il réduit de la même quantité le signal utile et le niveau de bruit, ce qui pose un problème pour les signaux d'amplitude faiblement supérieure au niveau du bruit qui sont pratiquement annulés. Un autre inconvénient provient de la réalisation pratique à l'aide de diodes ou de transistors montés en diodes dont la courbe de conduction n'est pas idéale. Par ce fait, la réduction du niveau du signal utile affecte et déforme aussi les signaux de plus grande amplitude.

Il existe des circuits de débruitage dont le principe consiste à annuler les signaux d'amplitude inférieure à un seuil égal au niveau de bruit et à transmettre intégralement et sans déformation les signaux d'amplitude supérieure ou égale au seuil. Ces circuits comportent généralement un redresseur à double alternance, un comparateur et un commutateur agissant sur un atténuateur. Ces dispositifs sont donc relativement complexes et présentent en outre des problèmes de phase et de vitesse de commutation qui les rendent difficilement utilisables aux fréquences très élevées des signaux de télévision à haute définition.

Pour résoudre le problème de débruitage d'un signal sans que l'amplitude du signal utile ne soit réduite et sans déformation de ce signal utile et pour conserver de bonnes performances en fréquence, le procédé de débruitage d'un signal selon l'invention consistant à annuler les signaux d'amplitude inférieure à un seuil égal au niveau de bruit et à transmettre intégralement les signaux d'amplitude supérieure ou égale au seuil est caractérisé en ce que l'annulation des signaux d'amplitude inférieure au seuil et la transmission des signaux d'amplitude supérieure ou égale au seuil est obtenue en utilisant un dispositif à seuil fonctionnant respectivement en régime bloqué pour annuler le signal bruité et en régime saturé pour transmettre le signal.

L'invention a également pour objet un dispositif de débruitage d'un signal pour la mise en oeuvre de ce procédé.

L'invention a enfin pour objet une application à la correction de contour d'une caméra de télévision.

D'autres particularités et avantages de l'invention apparaîtront clairement dans la description suivante faite en regard des figures annexées qui représentent :

- la figure 1, la courbe de transfert d'un dispositif à seuil, selon l'art antérieur ;
- la figure 2, la courbe de transfert d'un dispositif selon l'invention,
- la figure 3, le synoptique général d'un circuit de débruitage selon l'invention ;
- la figure 4, un circuit électronique de débruitage du signal, selon l'invention.

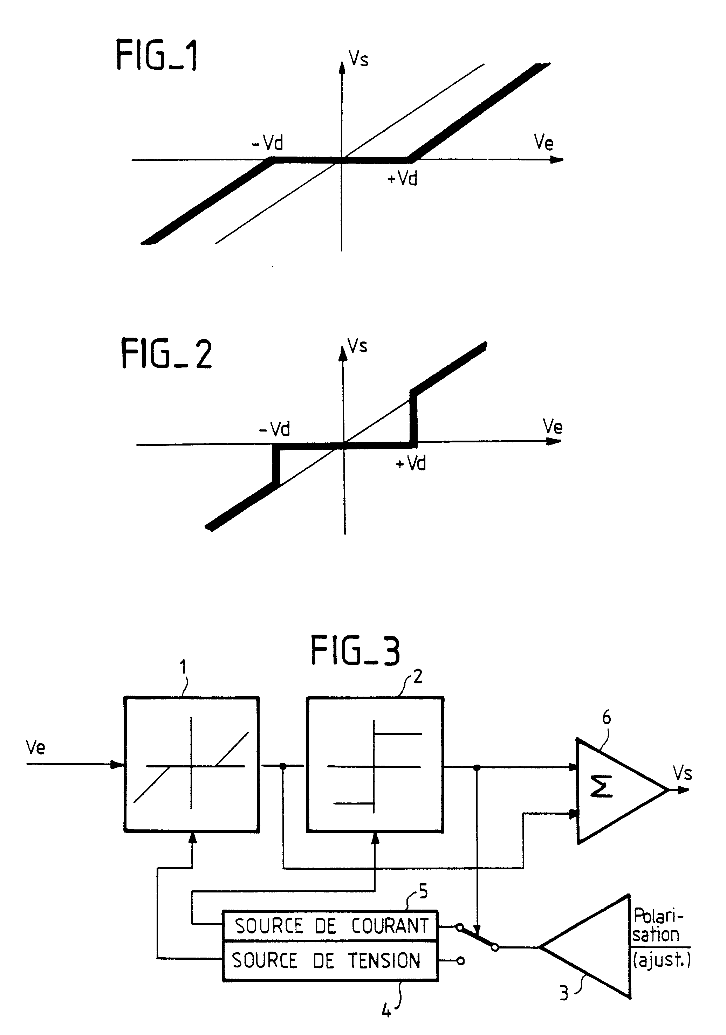

La figure 1 montre la courbe de transfert d'un dispositif à seuil obtenue lorsque le débruitage du signal est réalisé par un écrêtage dont le seuil se situe au niveau du bruit en considérant que le circuit électronique remplissant la fonction d'écrêtage utilise le seuil de conduction d'une diode idéale. Cette courbe de transfert obéit aux lois mathématiques suivantes :

$$|V_e| < |V_d| \longrightarrow V_s = 0$$
$$|V_e| > |V_d| \longrightarrow V_s = |V_e| - |V_d|$$

Lorsque la valeur absolue de l'amplitude du signal d'entrée $V_e$ est en dessous du niveau de bruit $V_d$, l'amplitude du signal en sortie du circuit de débruitage $V_s$ est nulle. Dans le cas contraire, l'amplitude du signal de sortie est égale à la différence des valeurs absolues de l'amplitude du signal d'entrée et du niveau du bruit.

La figure 2, illustre la courbe de transfert obtenue lorsque le débruitage du signal est réalisé par annulation des signaux d'amplitude inférieure à un seuil égal au niveau du bruit, le signal original étant transmis intégralement et sans déformation lorsque la valeur absolue de l'amplitude d'entrée est supérieure au seuil. Cette courbe de transfert obéit alors aux lois mathématiques suivantes : $|V_e| < |V_d| \longrightarrow$ $V_s = 0$
$$|V_e| > |V_d| \longrightarrow V_s = V_e$$

La figure 3 est le schéma synoptique du circuit de débruitage selon l'invention. Un dispositif à seuil 1 est associé à un dispositif d'amplification en courant 2 à grand gain saturable. Une polarisation, ajustable manuellement, est délivrée à basse impédance par un amplificateur d'adaptation d'impédance 3. En fonction du signal d'entrée Ve, cette polarisation est commutée : soit en source de tension 4 pour asservir le niveau de seuil du dispositif à seuil 1, soit en source de courant 5 pour maintenir la saturation de l'amplificateur 2 lorsque le signal est transmis du dispositif à seuil 1 vers le dispositif d'amplification 2. Enfin, les signaux en sortie du dispositif à seuil et en sortie du dispositif d'amplification sont sommés dans un amplificateur sommateur 6 pour obtenir le signal de contour débruité Vs.

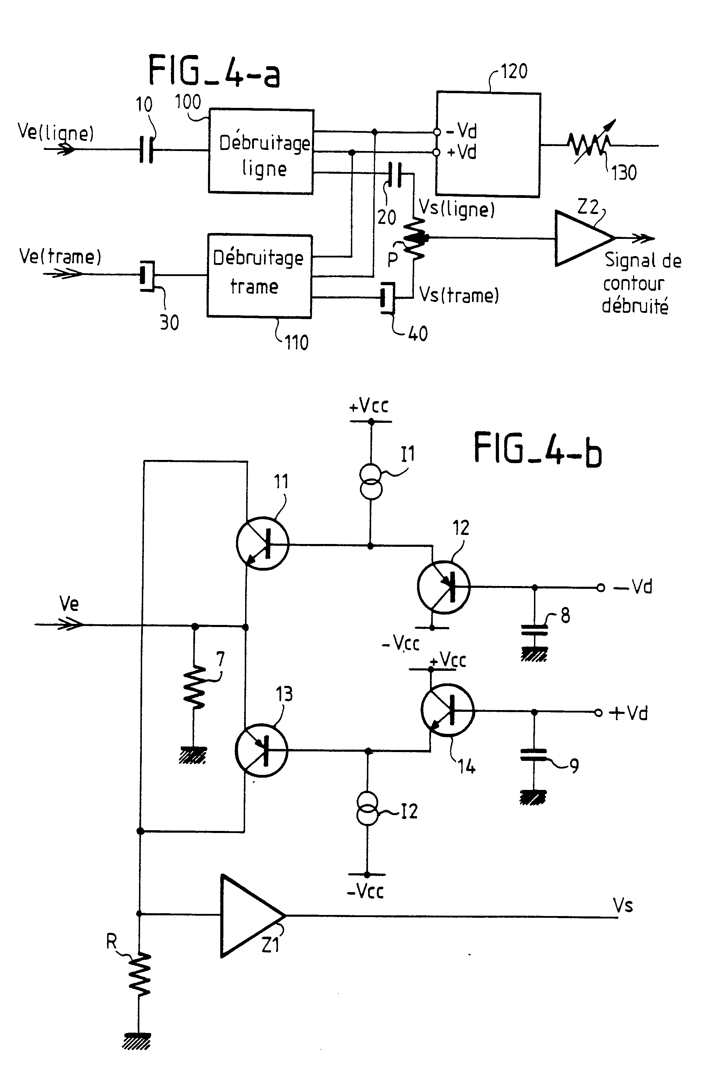

Les figures 4a et 4b montrent un exemple de circuit électronique réalisant le débruitage d'un signal selon l'invention, et particulièrement adapté au signaux de télévision c'est-à-dire avec un traitement sur le signal de ligne et un traitement sur le signal de trame. La figure 4a met en évidence que pour des signaux de télévision le montage comporte deux parties, ces deux parties concernent une voie pour le traitement du signal en ligne et une voie pour le traitement du signal en trame. Les signaux d'entrée ligne et trame passent respectivement par un circuit de débruitage ligne 100 ou trame 110 via un condensateur 10 ou 30. Ces circuits de débruitage ligne 100 et trame 110 sont alimentés par une source de tension symétrique 120 réglée par un potentiomètre 130. Les signaux ligne et trame débruités sont ensuite transmis au potentiomètre P via les condensateurs 20 ou 40 respectivement. Le signal de contour, somme des deux signaux ligne et trame, est disponible après réglage d'équilibrage des amplitudes des deux signaux ligne et trame par le potentiomètre P sur le curseur de ce potentiomètre et transmis par l'amplificateur d'adaptation d'impédance Z2.

Les circuits de débruitage ligne et trame sont identiques et sont détaillés sur la figure 4b dans laquelle une autre symétrie du montage est mise en évidence par l'utilisation des couples de transistors NPN 11 et 14 et PNP 12 et 13 pour obtenir le fonctionnement du circuit électronique de débruitage avec des signaux électroniques positifs et négatifs. Pour des signaux d'entrée Ve positifs, le fonctionnement est assuré par le couple de transistors 13 et 14, la source de courant $I_2$, et le condensateur 9. Pour des signaux d'entrée négatifs, le fonctionnement est assuré par le couple de transistors 11 et 12, la source de courant $I_1$, et le condensateur 8.

La suite de la description est effectuée pour des signaux d'entrée positifs. La description est la même pour des signaux négatifs en considérant les transistors 11 et 12, la source de courant $I_1$, le condensateur 8, le potentiel négatif $-V_{cc}$, le potentiel positif $+V_{cc}$, la tension de seuil $-V_d$, au lieu de considérer respectivement les transistors 13 et 14, la source de courant $I_2$, le condensateur 9, le potentiel positif $+V_{cc}$, le potentiel négatif $-V_{cc}$, la tension de seuil $+V_d$.

Pour le débruitage des signaux d'entrée positifs, le circuit électronique comprend un couple de transistors 13 et 14 tels que la base du transistor 13 est reliée d'une part à l'émetteur du transistor 14, d'autre part, à une source de courant $I_2$ qui fait circuler le courant vers le potentiel négatif $-V_{cc}$. Le transistor 14 est monté en émetteur-suiveur et polarisé à courant constant, tel que le collecteur du transistor 14 est au potentiel positif $+V_{cc}$ et sa base est découplée d'une part à la masse via un condensateur 9 et d'autre part à une source de tension dont le potentiel positif est la tension de seuil $+V_d$.

Le signal d'entrée Ve bruité est transmis à l'émetteur du transistor 13 polarisé à travers une résistance 7. Ce transistor est monté en base commune et il est bloqué tant que la jonction émetteur-base n'est pas conductrice. La conduction de la jonction émetteur-base du transistor 13 dépend du potentiel de la base imposé par le transistor 14 monté en collecteur commun. Ce potentiel qui détermine le seuil $V_d$ est assuré par une source de tension symétrique dont la valeur est ajustée par un potentiomètre P. Le potentiel de la base du transistor 14 étant égal à la tension de seuil $V_d$, le potentiel de base du transistor 13 est égal à la tension de seuil diminuée du potentiel émetteur-base du transistor 14. Tant que la valeur absolue de la tension d'entrée $V_e$ est inférieure à la valeur absolue de la tension de seuil $V_d$, aucun courant ne circule dans le transistor 13 car il est bloqué. Le courant débité par la source de courant $I_2$ traverse alors intégralement le transistor 14 et la tension de sortie $V_s$ égale à la tension du collecteur du transistor 13 est nulle. Dès que la valeur absolue de la tension d'entrée $V_e$ est supérieure à la valeur absolue de la tension de seuil $V_d$, la conduction de la jonction émetteur-base du transistor 13 est effective, il y a amplification en courant, du signal et saturation du transistor 13. Le transistor 13 doit être un excellent transistor hyperfréquence de commutation à très faible tension de saturation. Le transistor 13 étant saturé, le signal d'entrée Ve se retrouve appliqué sur la résistance R. Le potentiel de base du transistor 13 évoluant comme la tension d'émetteur, il en résulte le blocage du transistor 14. La base du transistor 13 est alors alimentée en courant par la source de courant $I_2$ qui ne peut plus traverser le transistor 14. Ce changement de mode maintient le fonctionnement en régime saturé du transistor 13. Le signal disponible aux bornes de la résistance R est transmis au potentiomètre P via un amplificateur d'adaptation d'impédance Z1.

L'invention est particulièrement applicable aux traitements des signaux de télévision, par exemple au débruitage des signaux pour la correction de contour des signaux d'image de télévision dans les caméras, magnétoscopes ou télécinémas. Elle s'applique également au traitement des signaux d'image radar.

## Revendications

1. Procédé de débruitage d'un signal, consistant à annuler les signaux d'amplitude inférieure à un seuil égal au niveau de bruit et à transmettre intégralement et sans déformation les signaux d'amplitude supérieure ou égale au seuil, caractérisé en ce que l'annulation des signaux (Ve) d'amplitude inférieure au seuil (Vd) et la transmission des signaux (Ve) d'amplitude supérieure ou égale au seuil (Vd) est obtenue en utilisant un dispositif à seuil (1) fonctionnant respectivement en régime bloqué pour annuler le signal bruité et en régime saturé pour transmettre le signal.

2. Procédé de débruitage d'un signal selon la revendication 1, caractérisé en ce que le seuil (Vd) est réglé par une polarisation ajustable manuellement.

3. Dispositif de débruitage d'un signal pour la mise en oeuvre du procédé selon l'une des revendications précédentes, caractérisé en ce qu il comporte deux dispositifs à seuil (1), respectivement pour les signaux d'entrée positifs et négatifs, qui ont une entrée destinée à recevoir le signal bruité (Ve), une entrée destinée à recevoir une tension de seuil (+Vd) pour les signaux positifs et (-Vd) pour les signaux négatifs, une sortie destinée à délivrer respectivement un signal de sortie (Vs) nul lorsque l'amplitude du signal d'entrée (Ve) est inférieure en valeur absolue au seuil (Vd) et un signal de sortie (Vs) égal au signal d'entrée (Ve) lorsque l'amplitude du signal d'entrée (Ve) est supérieure en valeur absolue au seuil (Vd).

4. Dispositif de débruitage d'un signal selon la revendication 3, caractérisé en ce que les dispositifs à seuil (1) sont deux transistors (13) et (11), respectivement pour les signaux d'entrée (Ve) positifs et négatifs qui fonctionnent en régime bloqué, respectivement en régime saturé, lorsque l'amplitude du signal d'entrée (Ve) est inférieure, respectivement supérieure, au seuil (Vd).

5. Dispositif de débruitage d'un signal selon la revendication 4, caractérisé en ce que les transistors (13) et (11) sont des transistors hyperfréquences de commutation à très faible tension de saturation.

6. Dispositif de débruitage d'un signal selon l'une quelconque des revendications 4 à 5, caractérisé en ce que les tensions de seuil (+Vd) et (-Vd) sont appliquées respectivement sur les bases des transistors (13,11) par l'intermédiaire de deux transistors (14,12) montés en émetteur-suiveur et polarisés à courant constant.

7. Dispositif de débruitage d'un signal selon l'une quelconque des revendications 4 à 6, caractérisé en ce que les premiers transistors (13) et (11) sont montés en base commune et les autres transistors (14) et (12) sont montés en collecteur commun.

8. Dispositif de débruitage d'un signal selon l'une quelconque des revendications 4 à 7, caractérisé en ce que les transistors (13,11) et les transistors (14,12) sont l'un à l'autre complémentaires.

9. Application du dispositif de débruitage selon l'une quelconque des revendications 3 à 8 à la correction de contour d'une caméra de télévision, caractérisée en ce qu'elle comporte deux dispositifs de débruitage pour débruiter les signaux ligne et trame.

FIG_1

FIG_2

FIG_3

SOURCE DE COURANT

SOURCE DE TENSION

Polarisation
(ajust.)

# FIG_4-a

Ve(ligne) →| |— 10

100 Débruitage ligne

120 −Vd +Vd

130

Ve(trame) ⇒ 30

110 Débruitage trame

20

Vs(ligne)

P

Vs(trame) 40

Z2

Signal de contour débruité

# FIG_4-b

+Vcc

I1

11

12 −Vd

8 −Vcc

Ve ⇒

7

13

+Vcc

14 +Vd

9

I2

−Vcc

R

Z1

Vs

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 336 841  (SONY CORP.) <br> * Page 20, lignes 9-28; figure 6 * <br> --- | 1,3 | H 04 N   5/21 |
| A | EP-A-0 271 954  (NORTH AMERICAN PHILIPS CONSUMER ELECTRONICS CORP.) <br> * Colonne 3, ligne 55 - colonne 4, ligne 22; figures 3,4 * <br> --- | 1,3 | |
| A | US-A-4 009 334  (SYPULA) <br> * Colonne 6, lignes 6-65; figure 5 * <br> --- | 1,3 | |
| A | US-A-4 142 211  (FAROUDJA) <br> * Colonne 1, ligne 58 - colonne 2, ligne 11; colonne 3, ligne 58 - colonne 5, ligne 68; figure 1 * <br> ----- | 1,9 | |

| | |
|---|---|
| | **DOMAINES TECHNIQUES RECHERCHES (Int. Cl.5)** |
| | H 04 N |

Le présent rapport a été établi pour toutes les revendications

| Lieu de la recherche | Date d'achèvement de la recherche | Examinateur |
|---|---|---|
| LA HAYE | 29-05-1990 | BEQUET T.P. |